# EUROPEAN PATENT APPLICATION

(11) **EP 4 703 980 A1**
(43) Date of publication of application: **04.03.2026**
(21) Application number: 25198830.9
(22) Date of filing: 28.08.2025
(51) Int. Cl.: G06N 10/40

(54) **QUANTUM BIT DEVICE AND METHOD FOR MANUFACTURING QUANTUM BIT DEVICE**

(30) Priority: 29.08.2024 JP 2024147956
(71) Applicant: FUJITSU LIMITED, Kawasaki-shi, Kanagawa 211-8588 (JP)
(72) Inventor: SHIBA, Shoichi, Kawasaki-shi, 211-8588 (JP); TABUCHI, Yutaka, Wako-shi, 351-0198 (JP); TAMATE, Shuhei, Wako-shi, 351-0198 (JP)
(74) Representative: Haseltine Lake Kempner LLP

(57) **Abstract**

A quantum bit device includes a quantum bit substrate having a first quantum bit and a second quantum bit, a connection substrate provided to face the quantum bit substrate, and a coupled line including a first wiring and a second wiring forming a differential pair and forming capacitive coupling between the first quantum bit and the second quantum bit. At least one of the first wiring or the second wiring is provided on the connection substrate.

## Description

### FIELD

The disclosed technology relates to a quantum bit device and a method for manufacturing the quantum bit device.

### BACKGROUND

As a technology related to a quantum bit device, the following technology is known. Patent Literature 1 describes a device including a first quantum bit, a second quantum bit, a resonator that capacitively couples the first quantum bit to the second quantum bit, and a differential direct coupler that capacitively couples the first quantum bit to the second quantum bit. The differential direct coupler capacitively couples opposing pads of the first and second quantum bits.

Patent Literature 2 describes a quantum computer system including a plurality of quantum circuits arranged in a two-dimensional layout, in which at least one internal quantum circuit of the plurality of quantum circuits includes a signal line extending out of the two-dimensional layout of the plurality of quantum circuits.

### Related Patent Documents

Patent Literature 1: Japanese National-Phase Publication (JP-A) No. 2023-528762
Patent Literature 2: Japanese National-Phase Publication (JP-A) No. 2021-504948

As a quantum bit (Qubit) constituting a quantum bit device, one using a transmon is known. The transmon has a configuration in which a superconducting Josephson element and a capacitor are connected in parallel, and performs a quantum operation using nonlinear energy. In a multi-bit quantum bit device, a plurality of quantum bits are connected to each other via a coupled line having a capacitor.

As a structure of a quantum bit, for example, a structure having a concentric pattern including a circular inner electrode and an annular outer electrode surrounding the inner electrode as described in Japanese Patent Application Laid-Open (JP-A) No. 2022-172189 and having a floating structure is known. According to this structure, since the ground capacitance of the quantum bit becomes relatively large, the extraction efficiency of the electromagnetic field from the quantum bit becomes relatively low. Therefore, it is necessary to relatively increase the capacitance of the capacitor provided in the coupled line for forming capacitive coupling between the quantum bits. When the capacitance between the quantum bits increases, the risk of occurrence of crosstalk between the quantum bits increases.

### SUMMARY

The disclosed technology has been made in view of the above points, and it is desirable to improve electromagnetic field extraction efficiency from a quantum bit while suppressing crosstalk by adding technical ingenuity to a coupled line formed between one quantum bit and a plurality of other quantum bits adjacent thereto.

A quantum bit device according to an embodiment of the disclosed technology includes: a quantum bit substrate having a first quantum bit and a second quantum bit; a connection substrate provided to face the quantum bit substrate; and a coupled line including a first wiring and a second wiring forming a differential pair and forming capacitive coupling between the first quantum bit and the second quantum bit. At least one of the first wiring or the second wiring is provided on the connection substrate.

### BRIEF DESCRIPTION OF THE DRAWINGS

The invention is described, by way of example only, with reference to the following drawings, in which:
Fig. 1 is a diagram schematically illustrating an example of a configuration of a quantum bit device according to an embodiment of the disclosed technology;
Fig. 2 is a plan view illustrating an example of a layout on one surface of a quantum bit substrate according to an embodiment of the disclosed technology;
Fig. 3 is a plan view illustrating an example of a layout on a surface facing a quantum bit substrate of a connection substrate according to an embodiment of the disclosed technology;
Fig. 4 is a cross-sectional view of a quantum bit device according to an embodiment of the disclosed technology;
Fig. 5 is an equivalent circuit diagram of an operation block according to an embodiment of the disclosed technology;
Fig. 6 is a plan view illustrating an example of a quantum bit pattern according to an embodiment of the disclosed technology;
Fig. 7 is a cross-sectional view illustrating an example of a configuration of a Josephson element according to an embodiment of the disclosed technology;
Fig. 8 is a plan view illustrating an example of a layout of first wiring and second wiring according to an embodiment of the disclosed technology;
Fig. 9 is an equivalent circuit diagram corresponding to Fig. 8;
Fig. 10A is a cross-sectional view illustrating an example of a process of manufacturing the quantum bit substrate according to an embodiment of the disclosed technology;
Fig. 10B is a cross-sectional view illustrating an example of the process of manufacturing the quantum bit substrate according to the embodiment of the disclosed technology;
Fig. 10C is a cross-sectional view illustrating an example of the process of manufacturing the quantum bit substrate according to the embodiment of the disclosed technology;
Fig. 10D is a cross-sectional view illustrating an example of the process of manufacturing the quantum bit substrate according to the embodiment of the disclosed technology;
Fig. 10E is a cross-sectional view illustrating an example of the process of manufacturing the quantum bit substrate according to the embodiment of the disclosed technology;
Fig. 10F is a cross-sectional view illustrating an example of the process of manufacturing the quantum bit substrate according to the embodiment of the disclosed technology;
Fig. 10G is a cross-sectional view illustrating an example of the process of manufacturing the quantum bit substrate according to the embodiment of the disclosed technology;
Fig. 10H is a cross-sectional view illustrating an example of the process of manufacturing the quantum bit substrate according to the embodiment of the disclosed technology;
Fig. 11A is a cross-sectional view illustrating an example of a manufacturing process of a connection substrate according to an embodiment of the disclosed technology;
Fig. 11B is a cross-sectional view illustrating an example of the manufacturing process of the connection substrate according to the embodiment of the disclosed technology;
Fig. 11C is a cross-sectional view illustrating an example of the manufacturing process of the connection substrate according to the embodiment of the disclosed technology;
Fig. 12A is a view illustrating an example of a step of combining a quantum bit substrate and a connection substrate according to an embodiment of the disclosed technology;
Fig. 12B is a view illustrating an example of a step of combining the quantum bit substrate and the connection substrate according to the embodiment of the disclosed technology;
Fig. 13 is a plan view illustrating an example of a layout in a case where both the first wiring and the second wiring are formed on a single plane;
Fig. 14A is a graph illustrating a simulation result of loss in a case where signal transmission is performed between quantum bits coupled by a coupled line configured by single-phase wiring;
Fig. 14B is a graph illustrating a simulation result of loss in a case where signal transmission is performed between quantum bits coupled by a coupled line configured by differential wiring;
Fig. 15 is a cross-sectional view illustrating an example of a configuration of a quantum bit device according to another embodiment of the disclosed technology;
Fig. 16 is a plan view illustrating an example of a layout of first wirings and second wirings according to another embodiment of the disclosed technology;
Fig. 17 is an equivalent circuit diagram corresponding to Fig. 16;
Fig. 18 is a plan view illustrating an example of a layout of first wirings and second wirings according to another embodiment of the disclosed technology;
Fig. 19 is a simulation result of loss in a case where signal transmission is performed between quantum bits coupled by a coupled line configured by asymmetric differential wiring;
Fig. 20A is a plan view illustrating an example of a layout of first wirings and second wirings according to another embodiment of the disclosed technology;
Fig. 20B is a plan view illustrating an example of a layout of first wirings and second wirings according to another embodiment of the disclosed technology; and
Fig. 21 is a plan view illustrating an example of a layout of first wirings and second wirings according to another embodiment of the disclosed technology.

### DESCRIPTION OF EMBODIMENTS

Hereinafter, an example of an embodiment of the disclosed technology will be described with reference to the drawings. In the drawings, the same or equivalent components and portions are denoted by the same reference numerals, and redundant description is omitted.

### First Embodiment

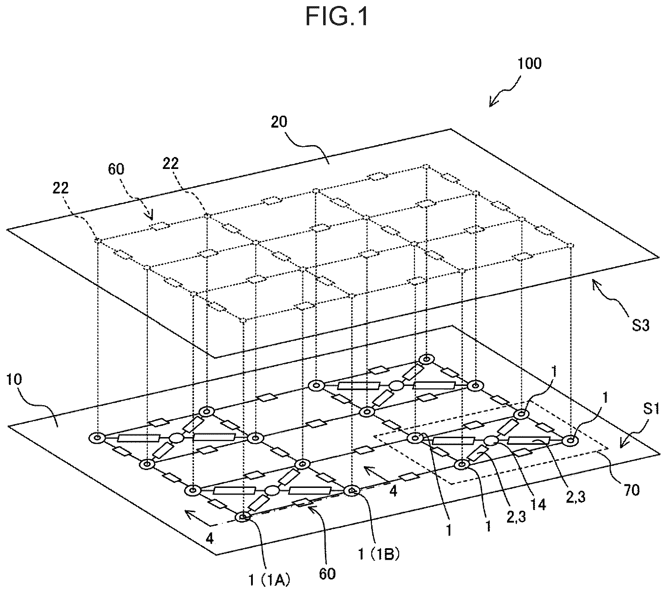

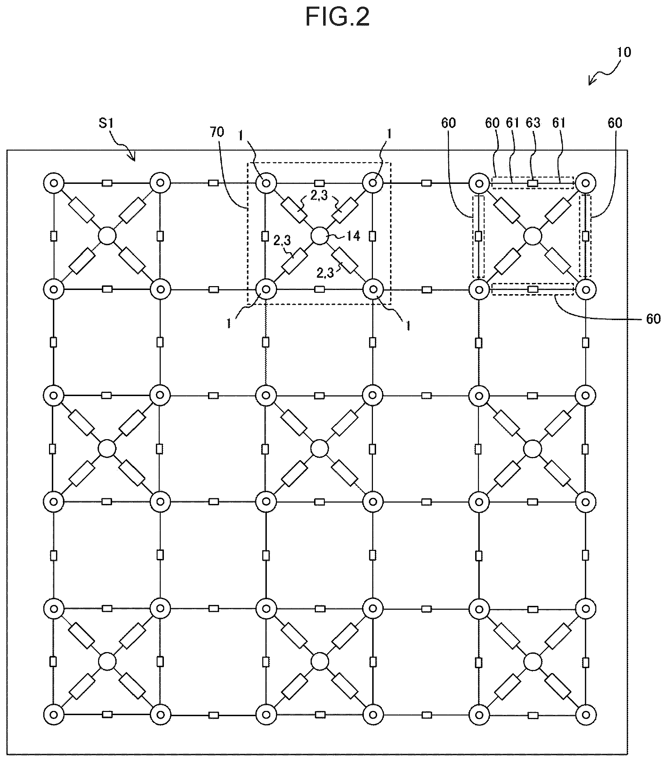

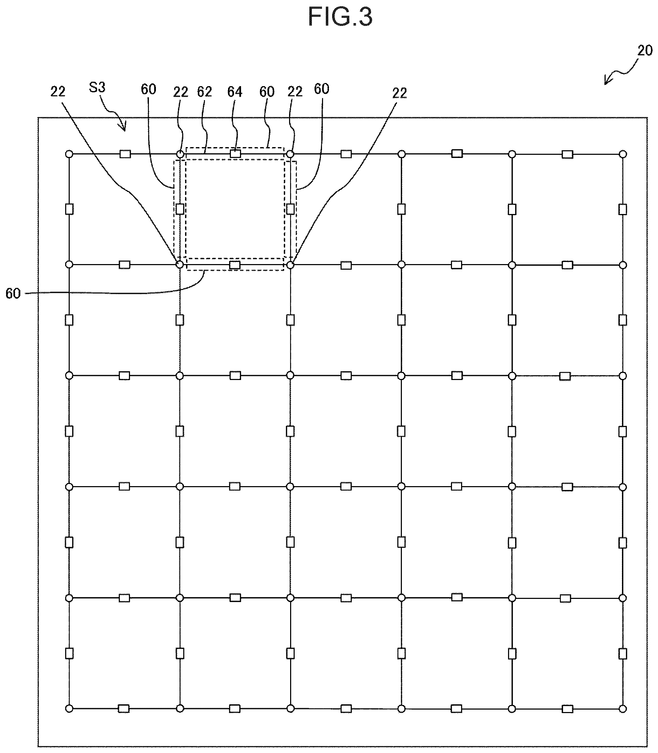

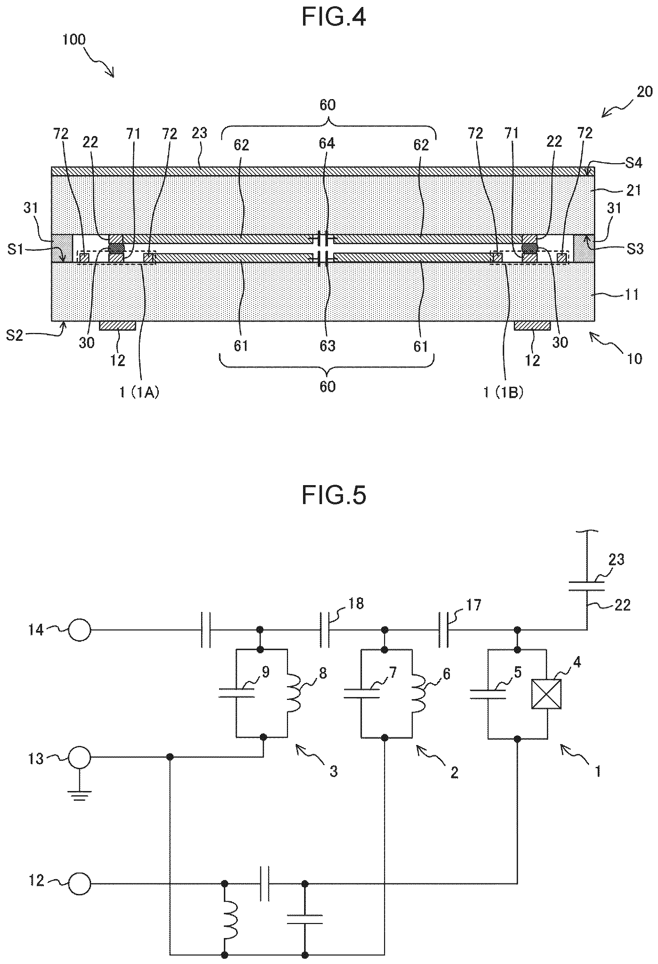

Fig. 1 is a diagram schematically illustrating an example of a configuration of a quantum bit device 100 according to an embodiment of the disclosed technology. The quantum bit device 100 includes a quantum bit substrate 10 and a connection substrate 20. These substrates are stacked such that a surface S1 of the quantum bit substrate 10 and a surface S3 of the connection substrate 20 face each other. Fig. 2 is a plan view illustrating an example of a layout on the surface S1 of the quantum bit substrate 10, and Fig. 3 is a plan view illustrating an example of a layout on the surface S3 of the connection substrate 20. Fig. 4 is a cross-sectional view of the quantum bit device 100, illustrating a cross section taken along a line 4-4 in Fig. 1.

The quantum bit device 100 has four quantum bits 1 provided on the quantum bit substrate 10 as a basic unit 70. Four quantum bits 1 constituting one basic unit 70 are arranged at positions corresponding to four vertexes of a square, and a reading port 14 is arranged at the center of the square. One reading port 14 is shared by four quantum bits 1. A resonator 2 and a filter 3 are provided on each path from each of the four quantum bits 1 to the reading port 14. Each quantum bit 1 is connected to another adjacent quantum bit 1 via a coupled line 60. The coupled line 60 includes two wires forming a differential pair. When each quantum bit 1 is connected to another adjacent quantum bit 1 via the coupled line 60, capacitive coupling is formed between the adjacent quantum bits. Each quantum bit 1 creates a quantum entangled state with another adjacent quantum bit 1 and performs a quantum operation.

Fig. 5 is an equivalent circuit diagram of an operation block including one quantum bit 1, one resonator 2, and one filter 3. The quantum bit 1 is an element that forms a coherent two-level system using superconductivity and performs a quantum operation using nonlinear energy. The quantum bit 1 has a transmon in which a Josephson element 4 and the capacitor 5 are connected in parallel.

The resonator 2 is connected to the quantum bit 1 via a capacitor 17. The resonator 2 interacts with the quantum bit 1 to read out a response signal indicating the state of the quantum bit 1. The resonator 2 has a resonance circuit in which a superconducting inductor 6 and a capacitor 7 are connected in parallel. The filter 3 is connected to the resonator 2 via a capacitor 18. The filter 3 suppresses relaxation of the signal having the frequency of the quantum bit 1 to the reading port 14. Similarly to the resonator 2, the filter 3 has a resonance circuit in which a superconducting inductor 8 and a capacitor 9 are connected in parallel.

A control port 12, a ground port 13, and the reading port 14 are connected to the operation block. A control signal for controlling the quantum bit 1 is input to the control port 12. The state of the quantum bit 1 is controlled by the control signal input to the control port 12. The response signal indicating the state of the quantum bit 1 is read from the reading port 14. The ground port 13 is connected to an external ground potential. The ground potential of the ground port 13 is shared by the ground of each portion of the operation block.

The quantum bit substrate 10 has a base material 11 made of, for example, silicon. A quantum bit 1, a resonator 2, and a filter 3 are provided on a surface S1 of the base material 11. The reading port 14 has a through-electrode structure penetrating the base material 11. The response signal output via the resonator 2 and the filter 3 is transmitted to a surface S2 of the base material 11 on the side opposite to the surface S1 by the reading port 14 of the through-electrode structure. A control port 12 is provided immediately below each quantum bit 1 on the surface S2 of the base material 11. A control signal input to the control port 12 acts on the quantum bit 1 via the base material 11.

A first wiring 61, which is one of a pair of differential wirings constituting the coupled line 60, is provided on the surface S1 of the base material 11. The first wiring 61 includes a capacitor 63 in the middle of its path. All the quantum bits arranged in a lattice pattern on the quantum bit substrate 10 are connected to the other adjacent quantum bits 1 via the first wiring 61.

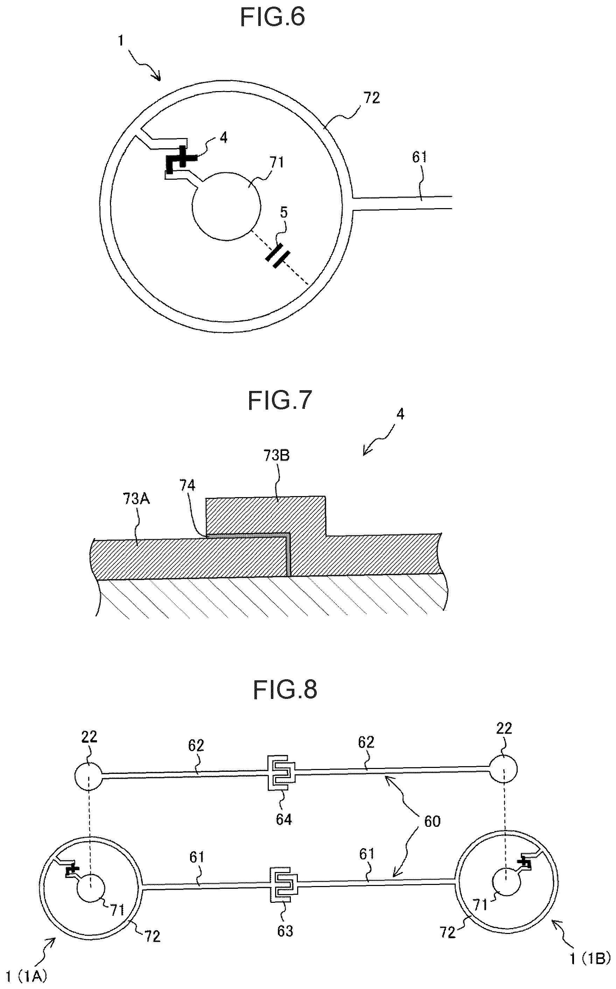

Fig. 6 is a plan view illustrating an example of a pattern of the quantum bit 1. The quantum bit 1 includes a circular inner electrode 71 and an annular outer electrode 72 surrounding the inner electrode 71. That is, the quantum bit 1 has a concentric pattern. The quantum bit 1 has the Josephson element 4 provided between the inner electrode 71 and the outer electrode 72. The inner electrode 71 also functions as one electrode of the capacitor 5, and the outer electrode 72 also functions as the other electrode of the capacitor 5. The transmon is configured by the Josephson element 4 and the capacitor 5 connected in parallel between the inner electrode 71 and the outer electrode 72.

Fig. 7 is a cross-sectional view illustrating an example of the configuration of the Josephson element 4. The Josephson element 4 includes a pair of superconductors 73A and 73B that exhibits superconductivity at a temperature equal to or lower than a predetermined critical temperature, and an extremely thin insulator 74 having a thickness of about several nm sandwiched between the superconductor 73A and the superconductor 73B. The superconductors 73A and 73B may be, for example, aluminum, and the insulator 74 may be, for example, aluminum oxide. The superconductor 73A is connected to the outer electrode 72, and the superconductor 73B is connected to the inner electrode 71. The first wiring 61 of the pair of differential wirings constituting the coupled line 60 is connected to the outer electrode 72.

The surface S1 of the quantum bit substrate 10 is covered with the connection substrate 20. The connection substrate 20 has a base material 21 made of, for example, silicon. A plurality of coupling pads 22 are provided on a surface S3 of the base material 21 facing the quantum bit substrate 10. The plurality of coupling pads 22 are provided in a lattice array corresponding to the array of the plurality of quantum bits 1 provided on the quantum bit substrate 10. More specifically, the plurality of coupling pads 22 are provided at positions overlapping the inner electrodes 71 of the plurality of quantum bits 1 in plan view.

On the surface S3 of the base material 21, a second wiring 62, which is the other of the pair of differential wirings constituting the coupled line 60, is provided. The second wiring 62 includes a capacitor 64 in the middle of its path. All the coupling pads 22 arranged in a lattice pattern on the connection substrate 20 are connected to the other adjacent coupling pads 22 via the second wiring 62. The second wiring 62 is provided in the same arrangement as the first wiring 61 provided on the quantum bit substrate 10.

Each of the plurality of coupling pads 22 is connected to the inner electrode 71 of the corresponding qubit 1 via a bump 30. That is, the second wiring 62 is connected to the inner electrode 71 via the coupling pad 22. All the quantum bits 1 arranged in a lattice pattern on the quantum bit substrate 10 are connected to other adjacent quantum bits 1 not only through the first wiring 61 but also through the second wiring 62.

The entire surface S4 of the connection substrate 20 opposite to the surface S3 is covered with a conductive film 23. The electromagnetic wave emitted from the quantum bit 1 during the operation of the quantum bit device 100 is blocked by the conductive film 23. A spacer 31 for forming a gap between the quantum bit substrate 10 and the connection substrate 20 is provided between these substrates. The spacer 31 may be formed by cutting the base material of the quantum bit substrate 10 or the connection substrate 20, or may be formed of another member such as metal.

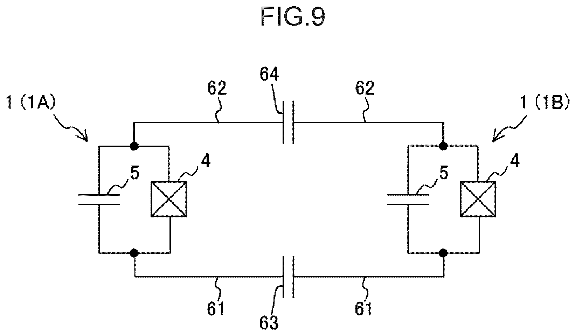

Fig. 8 is a plan view illustrating an example of a layout of the first wiring 61 and the second wiring 62 constituting the coupled line 60 that forms capacitive coupling between a quantum bit 1A and a quantum bit 1B. Fig. 9 is an equivalent circuit diagram corresponding to Fig. 8. One end of the first wiring 61 is connected to the outer electrode of the quantum bit 1A, and the other end of the first wiring 61 is connected to the outer electrode 72 of the quantum bit 1B. One end of the second wiring 62 is connected to the inner electrode 71 of the quantum bit 1A via a coupling pad 22A, and the other end of the second wiring 62 is connected to the inner electrode 71 of the quantum bit 1B via a coupling pad 22B. The first wiring 61 is connected to the outer electrode 72, and the second wiring 62 is connected to the inner electrode 71, thereby forming a differential pair. That is, differential signals having opposite phases are transmitted to the first wiring 61 and the second wiring 62. The capacitors 63 and 64 are provided in the middle of the paths of the first wiring 61 and the second wiring 62, respectively. Each of the capacitors 63 and 64 may be a planar capacitor having a pair of comb-shaped conductors as an electrode. In addition, the capacitors 63 and 64 may be laminated capacitors having a metal/insulator/metal (MIM) structure. Capacitive coupling is formed between the quantum bit 1A and the quantum bit 1B by the coupled line 60 including the first wiring 61 and the second wiring 62 forming a differential pair.

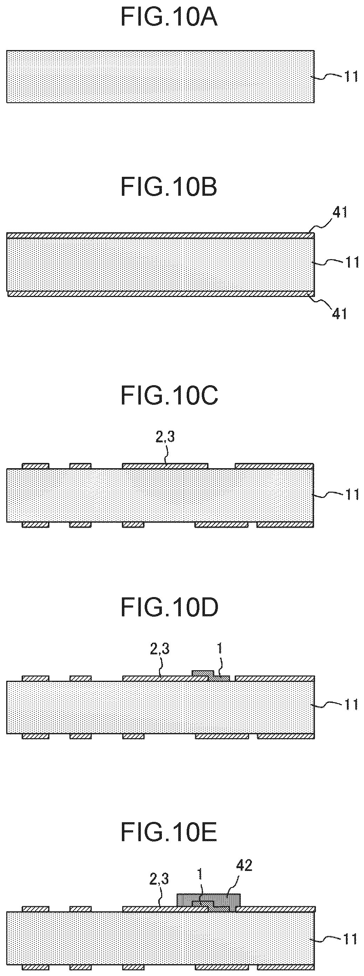

Hereinafter, a method of manufacturing the quantum bit device 100 will be described. Figs. 10A to 10H are cross-sectional views illustrating an example of a process of manufacturing the quantum bit substrate 10.

First, the base material 11 of the quantum bit substrate 10 is prepared. As the base material 11, for example, a silicon substrate having a thickness of about 300 µm can be used (Fig. 10A). Next, a conductive film 41 having a thickness of about 100 nm is formed on both surfaces of the base material 11 using, for example, a sputtering method, plasma chemical vapor deposition (CVD), or an ion plating method. For example, TiN can be used as the material of the conductive film 41 (Fig. 10B). Next, a resist mask (not illustrated) is formed on the surface of the conductive film 41, and the conductive film 41 is patterned by partially etching the conductive film 41 through the resist mask. As a result, the resonator 2, the filter 3, the first wiring 61, and the like are formed (Fig. 10C). The capacitor 63 is formed in the middle of the path of the first wiring 61.

Next, a quantum bit 1 is formed on the surface of the base material 11 (Fig. 10D). The superconducting Josephson element constituting the quantum bit 1 is formed through, for example, a step of forming a superconductor film (not illustrated) of Al or the like constituting the lower electrode on the surface of the base material 11 by a vapor deposition method, a step of forming an extremely thin oxide film (not illustrated) having a thickness of about several nm on the surface of the lower electrode using O₂ gas, and a step of forming a superconductor film (not illustrated) of Al or the like constituting the upper electrode on the surface of the oxide film by a vapor deposition method. The lower electrode and the upper electrode may be patterned by, for example, a lift-off method using a patterned resist mask (not illustrated). In this case, the opening pattern of the resist mask may have a cross shape having a first linear portion along a first direction and a second linear portion along a second direction orthogonal to the first direction, and the lower electrode may be formed in a portion corresponding to the first linear portion by performing vapor deposition while inclining the resist mask about the first direction as a rotation axis. Subsequently, the upper electrode may be formed in a portion corresponding to the second linear portion by performing vapor deposition while inclining the resist mask about the second direction as the rotation axis. According to the above method, the lower electrode and the upper electrode can be patterned by a single resist mask.

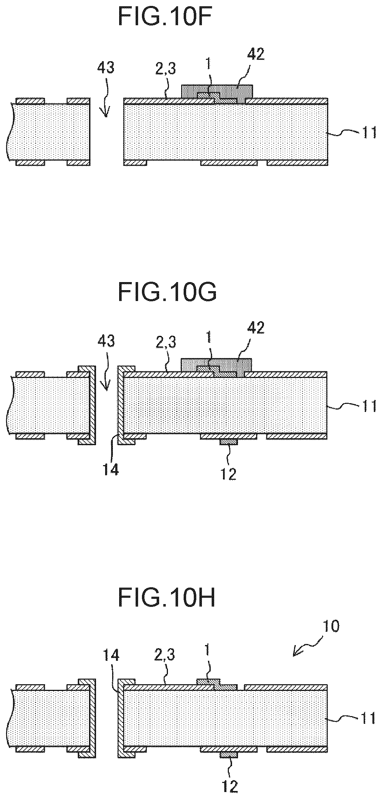

Next, a protective film 42 covering the surface of the quantum bit 1 is formed by, for example, a CVD method. For example, SiO₂ can be used as the material of the protective film 42. Thereafter, the protective film 42 is patterned using a photolithography technique (Fig. 10E). Next, a hard mask (not illustrated) having an opening at the formation position of the reading port 14 is formed, and a through hole 43 is formed at the formation position of the reading port 14 of the base material 11 by, for example, a deep-reactive ion etching (RIE) method using the hard mask (Fig. 10F). Next, a conductive film that covers the inner wall of the through hole 43 and the periphery of the opening end of the through hole 43 is formed by, for example, a vapor deposition method. For example, Al can be used as the material of the conductive film. Thereafter, the conductive film is patterned by, for example, a lift-off method. As a result, the control port 12 and the reading port 14 are formed (Fig. 10G). Next, the protective film 42 covering the quantum bit 1 is removed by etching using, for example, vapor hydrofluoric acid (Fig. 10H).

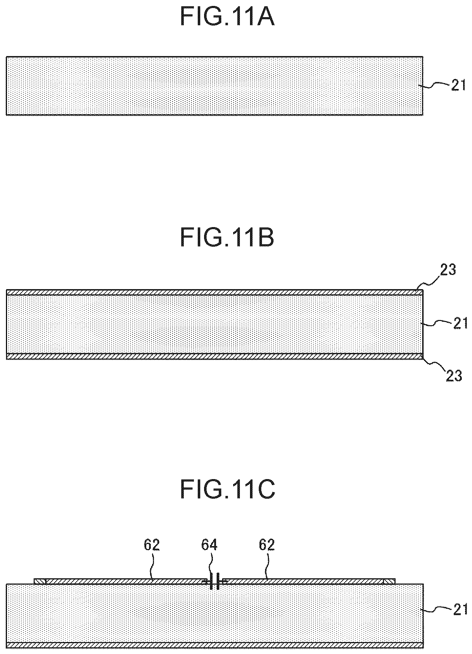

Figs. 11A to 11C are cross-sectional views illustrating an example of a manufacturing process of the connection substrate 20. First, the base material 21 of the connection substrate 20 is prepared. As the base material 21, for example, a silicon substrate having a thickness of about 300 µm can be used (Fig. 11A).

Next, the conductive film 23 having a thickness of about 100 nm is formed on both surfaces of the base material 21 using, for example, a sputtering method, plasma CVD, or an ion plating method. For example, TiN can be used as the material of the conductive film 23 (Fig. 11B). Next, a resist mask (not illustrated) is formed on the surface of the conductive film 23, and the conductive film 23 is patterned by partially etching the conductive film 23 through the resist mask. As a result, the coupling pad 22, the second wiring 62, and the like are formed (Fig. 11C). The capacitor 64 is formed in the middle of the path of the second wiring 62.

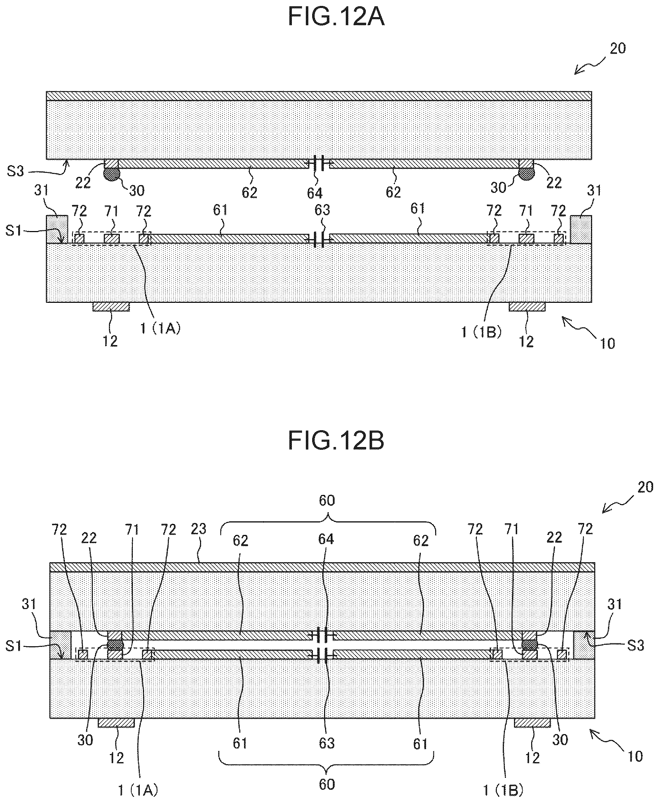

Figs. 12A and 12B are diagrams illustrating an example of a process of combining the quantum bit substrate 10 and the connection substrate 20. The bumps 30 are formed on the surfaces of the coupling pads 22 formed on the connection substrate 20 (Fig. 12A). For example, In can be used as the material of the bump 30. The bump 30 may be formed on the surface of the inner electrode 71 of the quantum bit 1. Next, a spacer 31 is formed on the surface of the base material 11 of the quantum bit substrate 10 (Fig. 12A). The spacer 31 may be formed by cutting the base material 11, or may be formed of another member such as metal. The spacer 31 may be formed on the surface of the base material of the connection substrate 20. Next, these substrates are arranged such that the surface S1 of the quantum bit substrate 10 on which the quantum bit 1 and the first wiring 61 are formed and the surface S3 of the connection substrate 20 on which the second wiring 62 and the coupling pad 22 are formed face each other (Fig. 12A).

Next, each of the plurality of coupling pads 22 provided on the connection substrate 20 and the inner electrode 71 of the corresponding quantum bit 1 provided on the quantum bit substrate 10 are connected via the bump 30 (Fig. 12B). As a result, the quantum bit 1 provided on the quantum bit substrate 10 and the second wiring 62 provided on the connection substrate 20 are connected. The first wiring 61 provided on the quantum bit substrate 10 and the second wiring 62 provided on the connection substrate 20 form a differential pair. Capacitive coupling is formed between adjacent quantum bits by the coupled line 60 including the first wiring 61 and the second wiring 62 forming a differential pair.

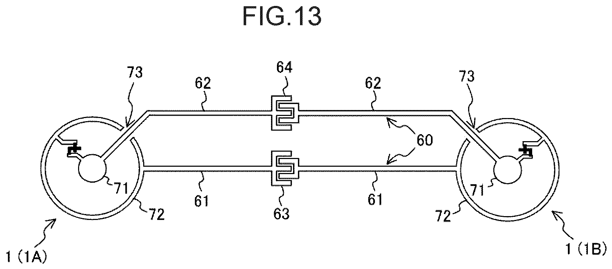

Here, in order to improve the extraction efficiency of the electromagnetic field from the quantum bit, the inventor has considered that it is effective to configure the coupled line between the quantum bits with the differential wiring. First, a case where both the first wiring 61 and the second wiring 62 forming a differential pair are formed on a single plane will be considered. The second wiring 62 connected to the inner electrode 71 of the quantum bit 1A is drawn out to the outside of the outer electrode 72 toward the adjacent quantum bit 1B. In a case where one quantum bit is coupled to only another quantum bit adjacent thereto, as illustrated in Fig. 13, the second wiring 62 can be drawn out to the outside of the outer electrode 72 by providing a defect portion 73 in the outer electrode 72 and passing the second wiring 62 through the defect portion 73. On the other hand, when one quantum bit and a plurality of other (four in the present embodiment) quantum bits adjacent thereto are to be combined, it is necessary to provide a plurality of defect portions in the outer electrode 72. When a plurality of defect portions are provided in the outer electrode 72, the outer electrode 72 is divided, and an intended circuit cannot be configured. Therefore, a plurality of defect portions cannot be provided in the outer electrode 72. As described above, in a configuration in which a plurality of quantum bits having a concentric pattern are arranged in a lattice pattern on a substrate, it is difficult in terms of layout to configure a coupled line formed between one quantum bit and another plurality of quantum bits adjacent thereto by differential wiring arranged in a single plane.

According to the quantum bit device 100 according to the embodiment of the disclosed technology, the second wiring 62 which is one of the differential wirings constituting the coupled line 60 is provided on the connection substrate 20 different from the quantum bit substrate 10. As a result, the second wiring 62 can be drawn out to the outside of the outer electrode 72 without providing a defect portion in the outer electrode 72. Therefore, according to the quantum bit device 100 according to the embodiment of the disclosed technology, a coupled line formed between one quantum bit and a plurality of other quantum bits adjacent thereto can be configured by differential wiring.

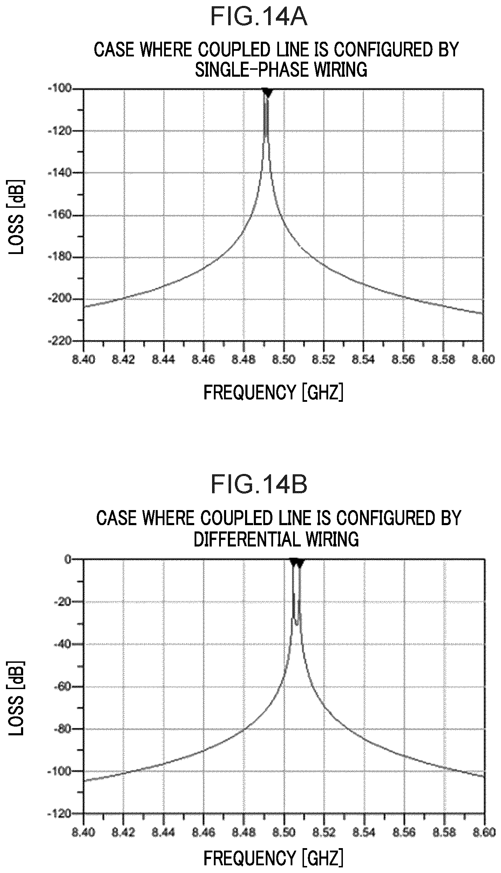

In addition, by configuring the coupled line between the quantum bits by the differential wiring, the extraction efficiency of the electromagnetic field from the quantum bits can be enhanced as compared with the case where the coupled line is configured by the single-phase wiring. Figs. 14A and 14B are simulation results of loss in a case where signal transmission is performed between quantum bits. Fig. 14A illustrates a case where the coupled line between the quantum bits is configured by a single-phase wiring, and Fig. 14B illustrates a case where the coupled line between the quantum bits is configured by differential wiring. The loss was about -100 dB when the coupled line between the quantum bits was constituted by the single-phase wiring. On the other hand, the loss was about -3 dB when the coupled line between the quantum bits was constituted by the differential wiring. As described above, by configuring the coupled line between the quantum bits by the differential wiring, as compared with a case where the coupled line is configured by the single-phase wiring, the extraction efficiency of the electromagnetic field from the quantum bits can be enhanced, and the signal transmission efficiency between the quantum bits can be enhanced. By increasing the signal transmission efficiency between the quantum bits, the capacitance of the capacitor provided in the coupled line can be reduced. This makes it possible to reduce the risk of occurrence of crosstalk between quantum bits. In addition, since common mode noise can be removed by configuring the coupled line between the quantum bits by the differential wiring, resistance to noise derived from the ground can be enhanced. As described above, according to the disclosed technology, it is possible to improve electromagnetic field extraction efficiency from a quantum bit while suppressing crosstalk by adding technical ingenuity to a coupled line formed between one quantum bit and a plurality of other quantum bits adjacent thereto.

### Second Embodiment

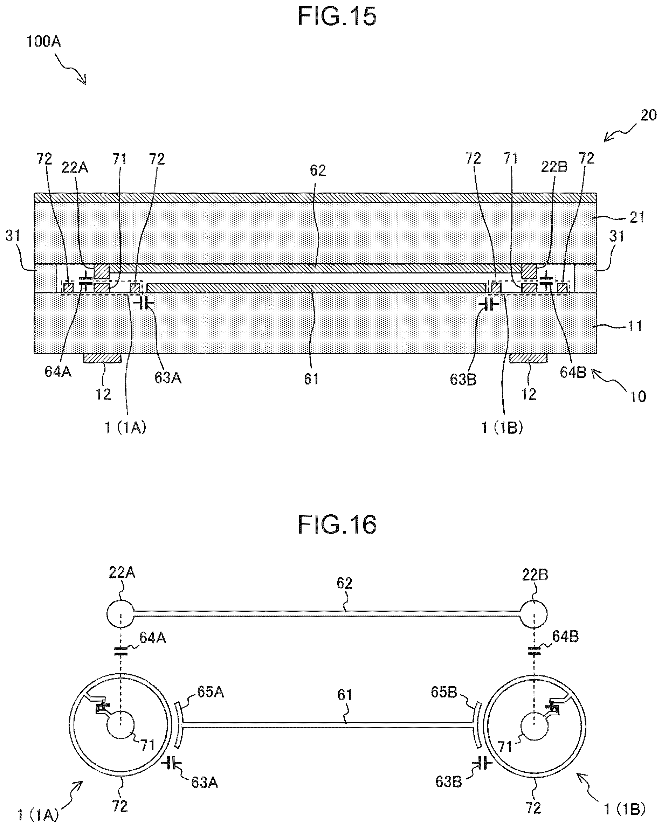

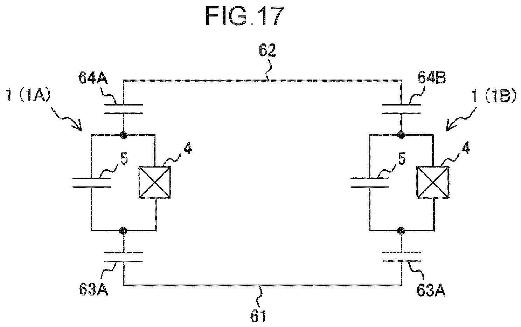

Fig. 15 is a cross-sectional view illustrating an example of a configuration of a quantum bit device 100A according to a second embodiment of the disclosed technology. Fig. 16 is a plan view illustrating an example of a layout of the first wiring 61 and the second wiring 62 according to the second embodiment. Fig. 17 is an equivalent circuit diagram corresponding to Fig. 16. In the quantum bit device 100 according to the first embodiment described above, the coupled line 60 includes the capacitors 63 and 64 in the middle of each path of the first wiring 61 and the second wiring 62. In a quantum bit device 100A according to the second embodiment, the coupled line 60 includes capacitors 63A and 63B at connection portions between the first wiring 61 and the quantum bits 1A and 1B, and includes capacitors 64A and 64B at connection portions between the second wiring 62 and the quantum bits 1A and 1B.

The coupling pad 22A connected to one end of the second wiring 62 is provided at a position overlapping the inner electrode 71 of the quantum bit 1A in plan view, and a gap is formed between the coupling pad 22A and the inner electrode 71 of the quantum bit 1A. As a result, a capacitor 64A in which the coupling pad 22A is one electrode and the inner electrode 71 of the quantum bit 1A is the other electrode is configured. Similarly, the coupling pad 22B connected to the other end of the second wiring 62 is provided at a position overlapping the inner electrode 71 of the quantum bit 1B in plan view, and a gap is formed between the coupling pad 22B and the inner electrode 71 of the quantum bit 1B. As a result, a capacitor 64B in which the coupling pad 22B is one electrode and the inner electrode 71 of the quantum bit 1B is the other electrode is configured. One end of the second wiring 62 is connected to the inner electrode 71 of the quantum bit 1A via the capacitor 64A, and the other end is connected to the inner electrode 71 of the quantum bit 1B via the capacitor 64B.

A gap is formed between an arc-shaped pattern 65A connected to one end of the first wiring 61 and the outer electrode 72 of the quantum bit 1A. As a result, a capacitor 63A in which the arc-shaped pattern 65A is one electrode and the outer electrode 72 of the quantum bit 1Ais the other electrode is configured. Similarly, a gap is formed between an arc-shaped pattern 65B connected to the other end of the first wiring 61 and the outer electrode 72 of the quantum bit 1B. As a result, a capacitor 63B in which the arc-shaped pattern 65B is one electrode and the outer electrode 72 of the quantum bit 1B is the other electrode is configured. One end of the first wiring 61 is connected to the outer electrode 72 of the quantum bit 1A via the capacitor 63A, and the other end is connected to the outer electrode 72 of the quantum bit 1B via the capacitor 63B.

According to the quantum bit device 100A according to the second embodiment of the disclosed technology, similarly to the first embodiment, a coupled line formed between one quantum bit and a plurality of other quantum bits adjacent thereto can be configured by differential wiring. In addition, the extraction efficiency of the electromagnetic field from the quantum bit 1 can be improved. Furthermore, since each of the first wiring 61 and the second wiring 62 is coupled to the quantum bit 1 in a non-contact manner, it is possible to suppress characteristic variations caused by connection failure or the like of bumps.

In the above description, the case where both the first wiring 61 and the second wiring 62 are connected to the quantum bit via the capacitor has been exemplified, but one of the first wiring 61 and the second wiring 62 may be connected to the quantum bit via the capacitor. However, in order to enhance the symmetry of the first wiring 61 and the second wiring 62, it is preferable that both the first wiring 61 and the second wiring 62 are connected to a quantum bit via a capacitor.

### Third Embodiment

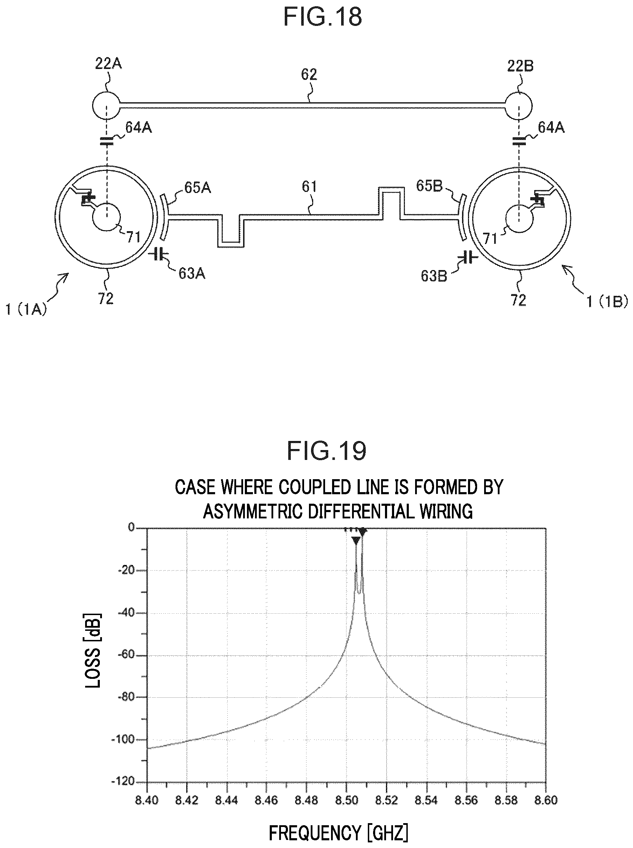

Fig. 18 is a plan view illustrating an example of a layout of the first wiring 61 and the second wiring 62 according to a third embodiment of the disclosed technology. In the first and second embodiments described above, the first wiring 61 has a pattern extending in a straight line. In the third embodiment, the first wiring 61 has a meandering pattern.

The distance between the outer electrode 72 of the quantum bit 1A and the outer electrode 72 of the quantum bit 1B is shorter than the distance between the inner electrode 71 of the quantum bit 1A and the inner electrode 71 of the quantum bit 1B. Therefore, when the pattern of the first wiring 61 formed between the outer electrode 72 of the quantum bit 1A and the outer electrode 72 of the quantum bit 1B is a linearly extending pattern, the length of the first wiring 61 is shorter than that of the second wiring 62, and the symmetry of the first wiring 61 and the second wiring 62 forming the differential pair is impaired.

According to the quantum bit device of the third embodiment, since the first wiring 61 has a meandering pattern, the wiring lengths of the first wiring 61 and the second wiring 62 can be made uniform. As a result, the symmetry of the first wiring 61 and the second wiring 62 forming the differential pair can be enhanced, and an ideal differential wiring can be configured.

Fig. 19 is a simulation result of loss in a case where signal transmission is performed between quantum bits coupled by a coupled line configured by asymmetric differential wiring. In order to simulatively form a state in which the wiring lengths of the first wiring 61 and the second wiring 62 are asymmetric, an inductor component is inserted into one of the differential wirings. The loss in this case was about -4 dB to -8 dB. On the other hand, a loss in a case where signal transmission is performed between quantum bits using a coupled line configured by symmetric differential wiring is about -3 dB (see Fig. 14B). As described above, by enhancing the symmetry of the differential wiring, the transmission efficiency of the signal between the quantum bits can be further enhanced.

Although Fig. 18 illustrates the first wiring 61 having a crank-shaped meandering pattern, the form of the meandering pattern is not particularly limited, and the first wiring 61 may have, for example, an arc-shaped meandering pattern. Although Fig. 18 illustrates a case where the second wiring 62 has a pattern extending in a straight line, both the first wiring 61 and the second wiring 62 may have a meandering pattern. In this case, it is preferable to define the form of the meandering pattern of each wiring so that the wiring lengths of the first wiring 61 and the second wiring 62 are aligned.

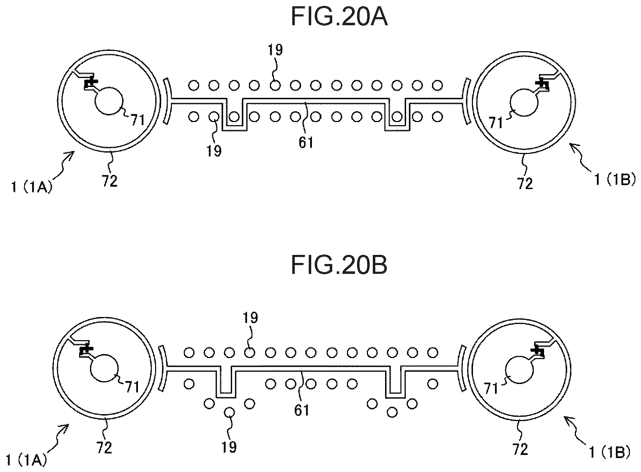

As illustrated in Fig. 20 A, when the quantum bit substrate 10 has a plurality of vias 19 penetrating the base material, the first wiring 61 may meander so as to avoid the vias 19. As illustrated in Fig. 20B, the vias 19 may be disposed so as to avoid first wiring 61 having a meandering pattern. The vias 19 may play a role of supplying a ground potential from one surface to the other surface of the quantum bit substrate 10, for example.

### Fourth Embodiment

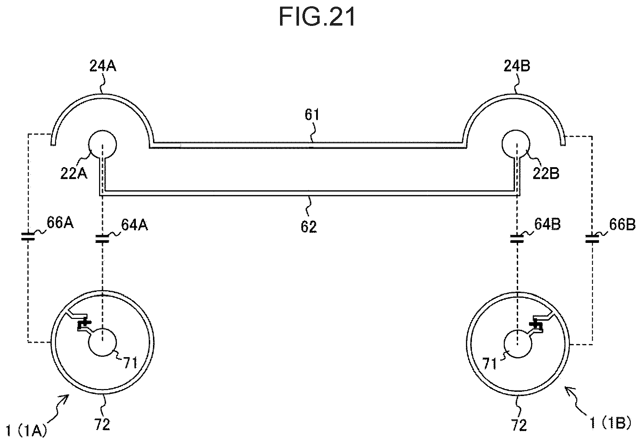

Fig. 21 is a plan view illustrating an example of a layout of the first wiring 61 and the second wiring 62 according to a fourth embodiment of the disclosed technology. In the quantum bit devices according to the first to third embodiments described above, among the first wiring 61 and the second wiring 62 constituting the differential pair, only the second wiring 62 is provided on the connection substrate 20. In the quantum bit device according to the fourth embodiment, both the first wiring 61 and the second wiring 62 are provided on the connection substrate 20.

One end of the second wiring 62 is connected to the inner electrode 71 of the quantum bit 1A via a capacitor 64A having the coupling pad 22A as one electrode and the inner electrode 71 of the quantum bit 1A as the other electrode. Similarly, the other end of the second wiring 62 is connected to the inner electrode 71 of the quantum bit 1B via a capacitor 64B having the coupling pad 22B as one electrode and the inner electrode 71 of the quantum bit 1B as the other electrode. Each of the coupling pads 22A and 22B has a circular pattern substantially the same as the inner electrode 71, and is provided at a position overlapping the inner electrode 71 of the corresponding quantum bit in plan view.

One end of the first wiring 61 is connected to the outer electrode 72 of the quantum bit 1A via a capacitor 66A having the coupling pad 24A as one electrode and the outer electrode 72 of the quantum bit 1A as the other electrode. Similarly, the other end of the first wiring 61 is connected to the outer electrode 72 of the quantum bit 1B via a capacitor 66B having the coupling pad 24B as one electrode and the outer electrode 72 of the quantum bit 1B as the other electrode. Each of the coupling pads 24A and 24B has an arc-shaped pattern corresponding to the annular pattern of the outer electrode 72, and is provided at a position overlapping the outer electrode 72 of the corresponding quantum bit in plan view.

According to the quantum bit device according to the fourth embodiment, similarly to the first embodiment, a coupled line that forms capacitive coupling between adjacent quantum bits can be configured by differential wiring. In addition, the extraction efficiency of the electromagnetic field from the quantum bit 1 can be improved. Furthermore, since both the first wiring 61 and the second wiring 62 are provided on the connection substrate 20, the symmetry of the first wiring 61 and the second wiring 62 forming the differential pair can be enhanced, and an ideal differential wiring can be configured. In order to further enhance the symmetry of the first wiring 61 and the second wiring 62, the capacitances of the capacitors 64A, 64B, 66A, and 66B are preferably about the same. The capacitances of the capacitors 66A and 66B can be set by adjusting the areas of the portions where the coupling pads 24A and 24B and the outer electrode 72 overlap. The above area can be set, for example, by adjusting the lengths of the arcs of the coupling pads 24A and 24B.

According to the disclosed technology, it is possible to improve electromagnetic field extraction efficiency from a quantum bit while suppressing crosstalk by adding technical ingenuity to a coupled line formed between one quantum bit and a plurality of other quantum bits adjacent thereto. In any of the above aspects, the various features may be implemented in hardware, or as software modules running on one or more processors/computers. The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

With regard to the first to fourth embodiments described above, the following supplementary notes are further disclosed.

### (Supplement 1)

A quantum bit device including:
a quantum bit substrate having a first quantum bit and a second quantum bit;
a connection substrate provided so as to face the quantum bit substrate; and
a coupled line including a first wiring and a second wiring forming a differential pair, the coupled line forming a capacitive coupling between the first quantum bit and the second quantum bit,
in which at least one of the first wiring or the second wiring is provided on the connection substrate.

### (Supplement 2)

The quantum bit device according to Supplement 1, in which
each of the first quantum bit and the second quantum bit includes:
a Josephson element having a pair of superconductors joined by a Josephson junction;
an inner electrode connected to one of the pair of superconductors; and
an annular outer electrode connected to the other of the pair of superconductors and surrounding the inner electrode,
the first wiring is connected to the outer electrode, and
the second wiring is connected to the inner electrode.

### (Supplement 3)

The quantum bit device according to Supplement 2, in which the second wiring is provided on the connection substrate.

### (Supplement 4)

The quantum bit device according to Supplement 1 or 2, in which both the first wiring and the second wiring are provided on the connection substrate.

### (Supplement 5)

The quantum bit device according to any one of Supplement 1 to 4, in which at least one of the first wiring or the second wiring meanders.

### (Supplement 6)

The quantum bit device according to Supplement 5, in which the first wiring and the second wiring have the same length.

### (Supplement 7)

The quantum bit device according to any one of Supplement 1 to 6, in which
the first wiring is connected to the first quantum bit via a capacitor, and
the second wiring is connected to the second quantum bit via a capacitor.

### (Supplement 8)

The quantum bit device according to any one of Supplement 1 to 7, in which the quantum bit substrate has three or more quantum bits including the first quantum bit and the second quantum bit.

### (Supplement 9)

A method of manufacturing a quantum bit device, including:
forming a quantum bit substrate having a first quantum bit and a second quantum bit;
forming a connection substrate; and
arranging the quantum bit substrate and the connection substrate such that the quantum bit substrate and the connection substrate face each other,
in which at least one of a first wiring and a second wiring forming a differential pair is provided on the connection substrate, the coupled line including the first wiring and the second wiring and forming a capacitive coupling between the first quantum bit and the second quantum bit.

### (Supplement 10)

The method of manufacturing according to Supplement 9, in which
each of the first quantum bit and the second quantum bit includes:
a Josephson element having a pair of superconductors joined by a Josephson junction;
an inner electrode connected to one of the pair of superconductors; and
an annular outer electrode connected to the other of the pair of superconductors and surrounding the inner electrode,
the first wiring is connected to the outer electrode, and
the second wiring is connected to the inner electrode.

### (Supplement 11)

The method of manufacturing according to Supplement 9, in which the second wiring is provided on the connection substrate.

### (Supplement 12)

The method of manufacturing according to Supplement 9 or 10, in which both the first wiring and the second wiring are provided on the connection substrate.

### (Supplement 13)

The method of manufacturing according to any one of Supplement 9 to 12, in which at least one of the first wiring or the second wiring meanders.

### (Supplement 14)

The method of manufacturing according to Supplement 13, in which the first wiring and the second wiring have the same length.

### (Supplement 15)

The method of manufacturing according to any one of Supplement 9 to 14, in which
the first wiring is connected to the first quantum bit via a capacitor, and
the second wiring is connected to the second quantum bit via a capacitor.

### (Supplement 16)

The method of manufacturing according to any one of Supplement 9 to 15, in which the quantum bit substrate has three or more quantum bits including the first quantum bit and the second quantum bit.

## Claims

1. A quantum bit device including:
a quantum bit substrate having a first quantum bit and a second quantum bit;
a connection substrate provided so as to face the quantum bit substrate; and
a coupled line including a first wiring and a second wiring forming a differential pair, the coupled line forming a capacitive coupling between the first quantum bit and the second quantum bit,
in which at least one of the first wiring or the second wiring is provided on the connection substrate.

2. The quantum bit device according to claim 1, in which
each of the first quantum bit and the second quantum bit includes:
a Josephson element having a pair of superconductors joined by a Josephson junction;
an inner electrode connected to one of the pair of superconductors; and
an annular outer electrode connected to the other of the pair of superconductors and surrounding the inner electrode,
the first wiring is connected to the outer electrode, and
the second wiring is connected to the inner electrode.

3. The quantum bit device according to claim 2, in which the second wiring is provided on the connection substrate.

4. The quantum bit device according to claim 1 or 2, in which both the first wiring and the second wiring are provided on the connection substrate.

5. The quantum bit device according to any one of claim 1 to 4, in which at least one of the first wiring or the second wiring meanders.

6. The quantum bit device according to claim 5, in which the first wiring and the second wiring have the same length.

7. The quantum bit device according to any one of claim 1 to 6, in which
the first wiring is connected to the first quantum bit via a capacitor, and
the second wiring is connected to the second quantum bit via a capacitor.

8. The quantum bit device according to any one of claim 1 to 7, in which the quantum bit substrate has three or more quantum bits including the first quantum bit and the second quantum bit.

9. A method of manufacturing a quantum bit device, including:
forming a quantum bit substrate having a first quantum bit and a second quantum bit;
forming a connection substrate; and
arranging the quantum bit substrate and the connection substrate such that the quantum bit substrate and the connection substrate face each other,
in which at least one of a first wiring and a second wiring forming a differential pair is provided on the connection substrate, the coupled line including the first wiring and the second wiring and forming a capacitive coupling between the first quantum bit and the second quantum bit.

10. The method of manufacturing according to claim 9, in which
each of the first quantum bit and the second quantum bit includes:
a Josephson element having a pair of superconductors joined by a Josephson junction;
an inner electrode connected to one of the pair of superconductors; and
an annular outer electrode connected to the other of the pair of superconductors and surrounding the inner electrode,
the first wiring is connected to the outer electrode, and
the second wiring is connected to the inner electrode.

11. The method of manufacturing according to claim 9, in which the second wiring is provided on the connection substrate.

12. The method of manufacturing according to claim 9 or 10, in which both the first wiring and the second wiring are provided on the connection substrate.

13. The method of manufacturing according to any one of claim 9 to 12, in which at least one of the first wiring or the second wiring meanders.

14. The method of manufacturing according to claim 13, in which the first wiring and the second wiring have the same length.

15. The method of manufacturing according to any one of claim 9 to 14, in which
the first wiring is connected to the first quantum bit via a capacitor, and
the second wiring is connected to the second quantum bit via a capacitor.
